**Europäisches Patentamt**

**European Patent Office**

**Office européen des brevets**

(19)

(11) Veröffentlichungsnummer: **0 319 693 B1**

## (12) EUROPÄISCHE PATENTSCHRIFT

(45) Veröffentlichungstag der Patentschrift:
13.11.91 Patentblatt 91/46

(51) Int. Cl.⁵: **F16D 65/60**

(21) Anmeldenummer: 88117973.3

(22) Anmeldetag: 28.10.88

(54) **Nachstellvorrichtung für Fahrzeugbremsen.**

(30) Priorität: 08.12.87 DE 3741519

(43) Veröffentlichungstag der Anmeldung:
14.06.89 Patentblatt 89/24

(45) Bekanntmachung des Hinweises auf die
Patenterteilung:
13.11.91 Patentblatt 91/46

(84) Benannte Vertragsstaaten:
DE GB IT SE

(56) Entgegenhaltungen:
EP-A- 0 154 799
EP-A- 0 158 034
DE-B- 1 575 750
DE-C- 3 625 107
US-A- 2 631 472

(73) Patentinhaber: Bergische Achsenfabrik Fr.
Kotz & Söhne
Am Ohlerhammer
W-5276 Wiehl 1 (DE)

(72) Erfinder: Henze, Erwin
Frh. v. Stein Strasse 28
W-5276 Wiehl (DE)
Erfinder: Ebbinghaus, Wilfried
Perkerstrasse 42
W-5276 Wiehl (DE)

(74) Vertreter: Patentanwälte Dipl.-Ing. Alex
Stenger Dipl.-Ing. Wolfram Watzke Dipl.-Ing.
Heinz J. Ring
Kaiser-Friedrich-Ring 70
W-4000 Düsseldorf 11 (DE)

EP 0 319 693 B1

## Beschreibung

Die Erfindung betrifft eine selbsttätige Nachstellvorrichtung für Fahrzeugbremsen mit einem als Bremshebel dienenden Gehäuse, in dem ein aus Schnecke und Schneckenrad bestehendes Nachstellgetriebe angeordnet ist, welches über eine Kupplung mit Stirnverzahnungen und ein Treibglied mit einem in das Gehäuse hineinragenden, feststehenden Hebel zusammenarbeitet, wobei eine Stirnverzahnung an der Schneckenwelle und die andere Stirnverzahnung an einem gegen eine erste Druckfeder verschiebbar auf der Schneckenwelle gelagerten Kupplungsring angeordnet ist, die Schneckenwelle am kupplungsseitigen Ende entgegen dem Drehsinn der Nachstellung manuell rückdrehbar ist und die Schneckenwelle mit einer axialbeweglichen Kappe abgedeckt ist, die mit einem nach außen vorspringenden Flansch einerseits einen Ansatz untergreift und andererseits am Kupplungsring anliegt.

Eine Nachstellvorrichtung der vorstehend beschriebenen Gattung ist beispielsweise aus der EP-OS 0154799 bekannt. Bei dieser bekannten Nachstellvorrichtung kann das Justieren nach einem Belagwechsel erst erfolgen, wenn das stirnseitige Ende der Schneckenwelle freigelegt worden ist. Dazu muß eine am Gehäuse befestigte Kappe entfernt werden. Danach kann auf den Schneckenwellenkopf ein Schlüssel aufgesteckt werden, der gleichzeitig den Kupplungsring herunterdrückt und dadurch die aus den beiden Stirnverzahnungen bestehende Kupplung lüftet. Ein Nachteil dieser bekannten Nachstellvorrichtung besteht darin, daß der Schneckenwellenkopf und die in diesem Bereich liegende Kupplung für die Justierung freigelegt werden müssen. Dabei kann Feuchtigkeit und Schmutz in die Nachstellvorrichtung hineingelangen und die Korrosion in Gang setzen. Ein weiterer Nachteil der bekannten Nachstellvorrichtung besteht darin, daß innerhalb des Gehäuses auf der Schneckenwelle eine Bremsscheibe angeordnet ist, welche ein unbeabsichtigtes Verdrehen der Schneckenwelle verhindert. Das Gehäuse der Nachstellvorrichtung baut deshalb um die Dicke der Bremsscheibe breiter.

Weiterhin ist aus der DE-PS 3625107 eine selbsttätige Nachstellvorrichtung für den gleichen Anwendungszweck mit zwei Kupplungen bekannt, bei der die beiden Kupplungen ebenfalls freigelegt werden müssen, um die Nachstellvorrichtung nach einem Belagwechsel manuell zurückzudrehen.

Schließlich ist aus der DE-AS 1575750 eine selbsttätige Nachstellvorrichtung für den Spreiznocken einer Backenbremse bekannt, die ein auf dem freien Ende der Speiznockenwelle befestigtes Schneckenrad und eine mit diesem in Antriebsverbindung stehende, in einem kastenförmigen Bremsbetätigungshebel gelagerte Schnecke aufweist, deren Welle mittels einer Sperrverzahnung eines auf der Schneckenwelle drehfest, aber axial entgegen der Kraft einer Feder verschiebbar angeordneten Klinkenrads mit einer Sperrverzahnung eines freidrehbar gelagerten treibenden Klinkenrads zusammenwirkt. Das Klingenrad ist mit dem Bremsbetätigungshebel derart verbunden, daß es erst nach Überschreiten des vorbestimmten Lüftspiels im Nachstellsinn verstellt wird. Auch bei dieser vorbekannten Nachstellvorrichtung ist ein Nachstellen der Kupplung nach einem Belagwechsel nur nach einem Freilegen der Kupplung manuell möglich.

Davon ausgehend liegt der Erfindung die **Aufgabe** zugrunde, eine einfach konstruierte Nachstellvorrichtung zu schaffen, die nach einem Belagwechsel entgegen dem Drehsinn der Nachstellung von Hand zurückgedreht und damit justiert werden kann, ohne daß dafür der Schneckenwellenkopf und die Kupplungseinrichtungen freigelegt werden müssen. Eine weitere **Aufgabe** besteht darin, gleichzeitig die Breite des Gehäuses zu verringern, um Gewicht zu sparen.

Zur technischen **Lösung** dieser Aufgabe wird vorgeschlagen, am Gehäuse einen, den Kupplungsring umgebenden Ring mit einem nach innen vorspringenden Ansatz zu befestigen, die Schneckenwelle mit einer axial beweglichen Kappe abzudecken, die mit einem nach außen vorspringenden Flansch einerseits den Ansatz untergreift und andererseits am Kupplungsring anliegt, zwischen der Schneckenwelle und der Kappe eine zweite Druckfeder anzuordnen und die Schneckenwelle und die Kappe gegen die Wirkung der zweiten Druckfeder durch Axialverschiebung der Kappe miteinander kuppelbar auszubilden, wobei diese Axialverschiebung den Kupplungsring auch verschiebt und damit die Stirnverzahnungen auskuppelt.

Bei einer erfindungsgemäß ausgebildeten Nachstellvorrichtung können die außerhalb des Gehäuses liegenden Berührungsflächen des Ansatzes und des Flansches als Reibungsbremse ausgebildet sein.

Eine nach dieser technischen Lehre ausgebildete Nachstellvorrichtung hat einerseits den **Vorteil,** daß die Justierung nach einem Belagwechsel durch Eindrücken der Kappe gegen die Wirkung der zweiten Druckfeder mit einem Werkzeug von Hand erfolgen kann, ohne dazu Schneckenwellenkopf und die in diesem Bereich angeordnete Kupplung freizulegen. Andererseits hat die vorgeschlagene Nachstellvorrichtung aber auch den weiteren **Vorteil,** daß das Gehäuse um die Breite der im Stand der Technik gemäß EP-OS 0154799 vorgesehenen Reibungsbremse kleiner gebaut werden kann und dadurch ein erheblich geringeres Gewicht hat, weil die Reibungsbremse jetzt außerhalb des Gehäuses zwischen den Berührungsflächen des Ansatzes und des Flansches liegt.

Bei einer praktischen Ausführungsform kann die Kupplung zwischen der Schneckenwelle und der Kappe

2

aus einem Außensechskant an der Schneckenwelle und einem Innensechskant an der Kappe bestehen. Es ist aber natürlich auch möglich, als Kupplungseinrichtung an der Scheckenwelle einen Innensechskant und an der Kappe einen Außensechskant vorzusehen.

Weiterhin hat es sich als zweckmäßig erwiesen, die zweite Druckfeder formschlüssig mit der Kappe und über eine Stirnverzahnung mit der Schneckenwelle zu verbinden, damit ein unbeabsichtigtes Verdrehen der Schneckenwelle verhindert wird.

Schließlich kann an den Ring eine elastische Dichtlippe angeformt werden, die der Kappe unter Vorspannung anliegt. Damit wird verhindert, daß Feuchtigkeit und Schmutz in den Spalt zwischen Kappe und Ring eindringen.

In der nachfolgenden Beschreibung der zugehörigen Zeichnungen werden bevorzugte Ausführungsformen einer erfindungsgemäß ausgebildeten Nachstellvorrichtung beschrieben. In den Zeichnungen zeigen :

| | |
|---|---|
| Fig. 1 | ein Bremsgestänge mit einer Nachstellvorrichtung in Seitenansicht ; |
| Fig. 2 | eine Nachstellvorrichtung mit teilweise entferntem Deckel zur Veranschaulichung des Nachstellmechanismus in Ausgangslage und in Seitenansicht ; |
| Fig. 3 | dieselbe Nachstellvorrichtung zur Veranschaulichung des Nachstellmechanismus in Endlage und in Seitenansicht ; |
| Fig. 4 | dieselbe Nachstellvorrichtung entlang der Linie IV-IV in Fig. 2 geschnitten in Stirnansicht ; |
| Fig. 5 | dieselbe Nachstellvorrichtung zur weiteren Veranschaulichung des Nachstellmechanismus in Ausgangslage und entland der Linie V-V in Fig. 2 geschnitten ; |
| Fig. 6 | dieselbe Nachstellvorrichtung zur Veranschaulichung der Endlage des Nachstellmechanismus entlang der Linie VI-VI in Fig. 3 geschnitten ; |
| Fig. 7 | dieselbe Nachstellvorrichtung zur Veranschaulichung einer außer Eingriff befindlichen Kupplung zwischen Kappe und Schneckenwelle entlang der Linie VII-VII in Fig. 6 geschnitten ; |
| Fig. 8 | einen Ausschnitt aus Fig. 7 mit eingerückter Kupplung zwischen Kappe und Schneckenwelle ; |
| Fig. 9 | einen vergrößerten Ausschnitt der Fig. 7 zur Veranschaulichung der ausgerückten Kupplung zwischen Kappe und Schneckenwelle ; |
| Fig. 10 | denselben Ausschnitt entlang der Linie X-X in Fig. 9 geschnitten ; |
| Fig. 11 | eine Ansicht der Kappe in Richtung des Pfeiles XI in Fig. 9 gesehen ; |
| Fig. 12 | eine andere Ausführungsform der Kupplung zwischen Kappe und Schneckenwelle im ausgerückten Zustand und im Längsschnitt ; |
| Fig. 13 | dieselbe Ausführungsform entlang der Linie XIII-XIII in Fig. 12 geschnitten ; |
| Fig. 14 | dieselbe Ausführungsform im eingerückten Zustand und im Längsschnitt. |

Ein Bremsgestänge besteht aus einem am Achskörper 1 befestigten Membranzylinder 2 mit einer Kolbenstange 3, die an einem Bremshebel 4 angreift, der auf einer — nicht dargestellten — Bremswelle angeordnet ist. Durch die Bewegung der Kolbenstange können die Bremsnocken in einer Trommelbremse gedreht und damit die Bremsbacken bzw. ihre Bremsbeläge zur Anlage an einer Bremstrommel gebracht werden.

Mit dem Bremshebel 4 ist ein Gehäuse 5 mit einem äußeren Deckel 6 und einem inneren Deckel 7 verbunden, in welchem eine Nachstellvorrichtung zum Ausgleich des Bremsbelagverschleißes angeordnet ist. Die Nachstellvorrichtung besteht aus einer auf einer Schneckenwelle 8 angeordneten Schnecke 9 und einem auf der — nicht dargestellten — Bremswelle mit einer Innenverzahnung befestigten Schneckenrad 10.

Neben der Schnecke 9 ist auf einer Seite in dem Gehäuse 5 eine Kupplung 11 angeordnet, welche aus einem auf der Schneckenwelle 8 gelagerten Kupplungsring 12 mit einer Stirnverzahnung 13 und einer auf der Unterseite eines als Sechskant ausgebildeten Schneckenwellenkopfes 14 angeordneten Stirnverzahnung 15 besteht. Die beiden Stirnverzahnungen 13, 15 werden mit einer auf der Schneckenwelle 8 angeordneten Druckfeder 16 in Eingriff gehalten.

Um die — nicht dargestellte — Bremswelle ist ein Hebel 17 angeordnet, der mit einer Hülse 18 unter dem äußeren Deckel 6 hindurch in das Gehäuse 5 hineingeführt ist und am anderen Ende einen Ring 19 mit einem Anschlagnocken 20 besitzt, welcher in eine Aussparung 21 des Gehäuses 5 eingreift. Der Anschlagnocken 20 und die Aussparung 21 begrenzen den maximalen Hub des Bremshebels 4 im Verhältnis zu dem Hebel 17, der mit einem feststehenden Teil des Fahrzeuges, beispielsweise dem Achskörper 1 verbunden ist.

Zwischen der Hülse 18 des Hebels 17 und dem Kupplungsring 12 ist ein flaches Treibglied 22 angeordnet. Dieses Treibglied 22 greift einerseits mit einem runden Kopf 23 in die Hülse 18 und andererseits mit einem Haken 24 in eine Ausnehmung 25 des Kupplungsringes 12 ein.

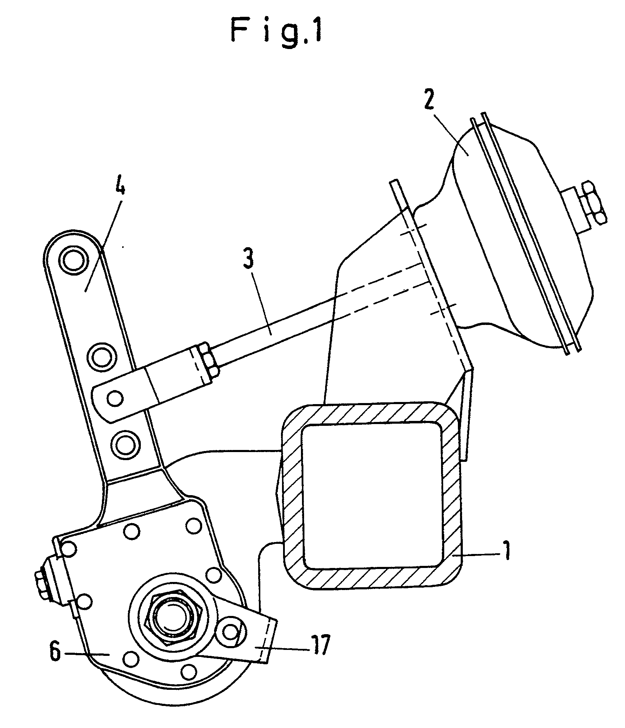

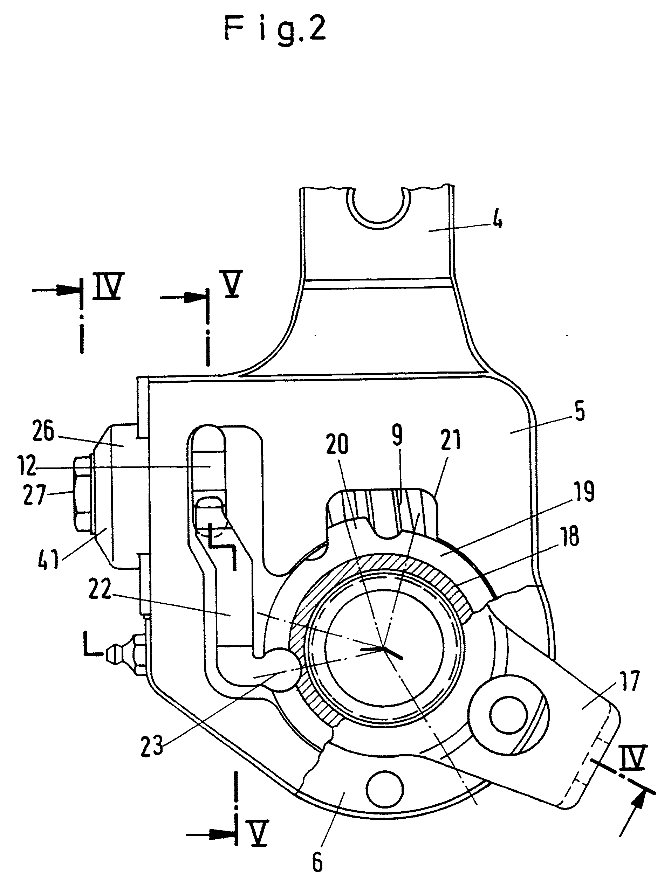

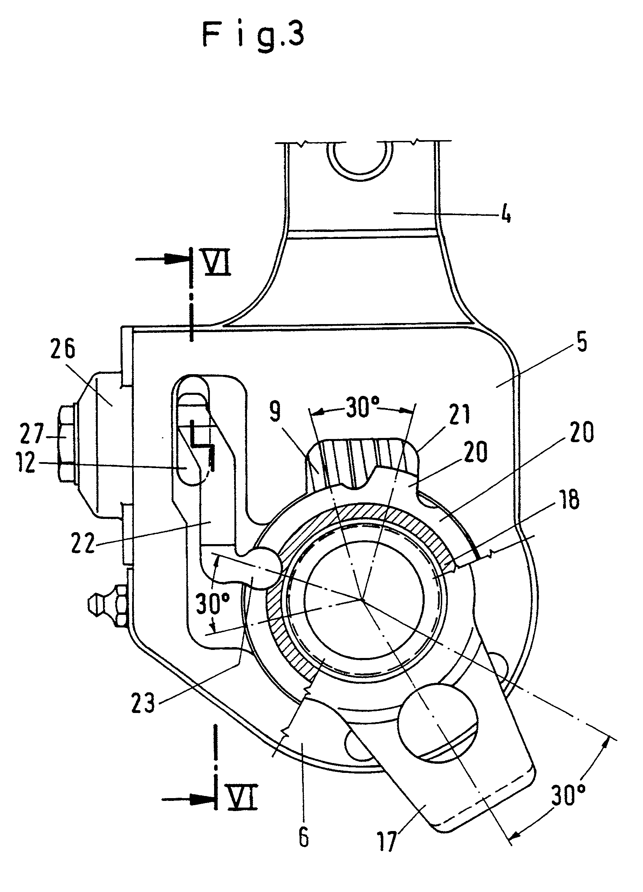

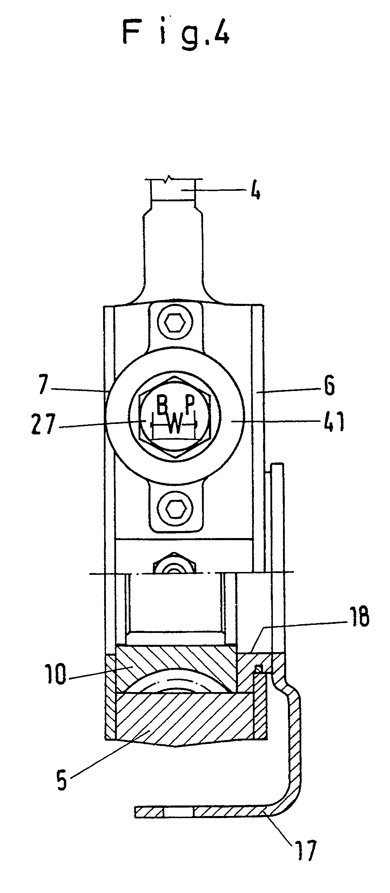

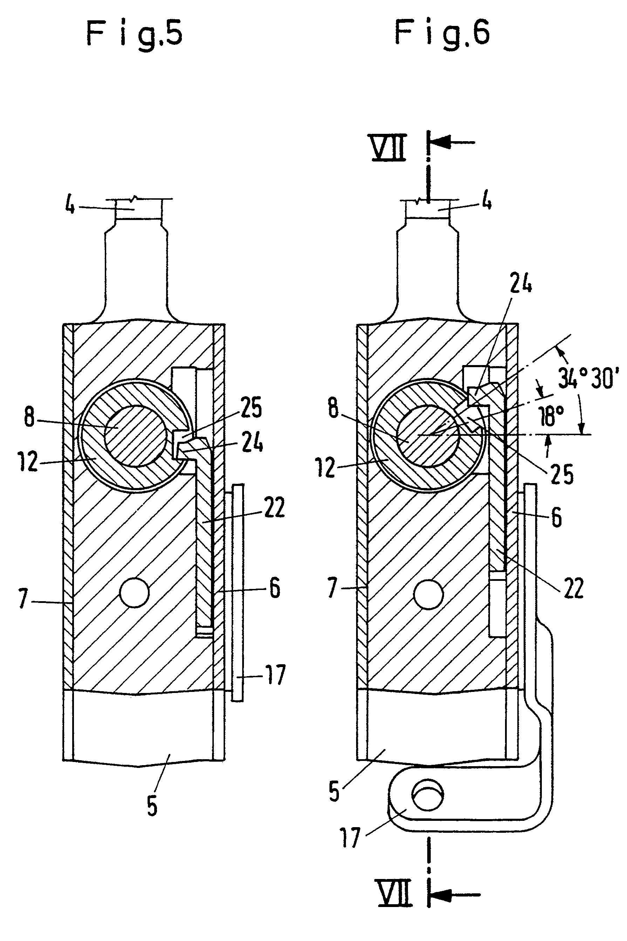

Beim Betätigen des Bremsgestänges wird der Hebel 4 relativ zum feststehenden Hebel 17 verdreht, wie es sich aus den Gegenüber stellungen der Fig. 2 und 3 bzw. 5 und 6 ergibt. Die maximale Verschwenkbewegung wird durch die Größe der Aussparung 21 im Gehäuse 5 bzw. des in diese eingreifenden Anschlagnocken 20 begrenzt und beträgt im dargeführten Ausführungsbeispiel 30°. Bei der Schwenkbewegung wird der Kupplungsring 12 mit dem Treibglied 22 relativ zur Schneckenwelle 8 gedreht. Solange der Bremshu.: unterhalb der Teilung der Stirnverzahnungen 13, 15 der Kupplung 11 bleibt, erfolgt keine Nachstellung. Sobald der Bremshub aber infolge des Bremsbelagverschleißes größer wird als die Teilung der beiden Stirnverzahnungen 13, 14, dann greifen die Zähne über, so daß beim Rückhub eine Nachstellung erfolgt.

Die Teilung der Zähne an den beiden Stirnverzahnungen 13, 15 und die Abmessungen der Ausnehmung 25 am Kupplungsring 12 und des Hakens 24 am Treibglied 22 müssen aufeinander abgestimmt werden, damit bei einem Hub immer nur eine Nachstellung um maximal eine Zahnlänge erfolgt und eine Beseitigung des für die Funktion der Bremse notwendigen Lüftspieles vermieden wird. Zu diesem Zwecke ist der Haken 24 an seiner Außenseite abgeschrägt und die Ausnehmung 25 ist größer als der Haken 24, so daß das vordere Ende des Hakens 24 beim tangentialen Verschieben aus der Ausnehmung 25 austreten kann und den Kupplungsring 12 danach nicht mehr verstellt. Solange der Haken 24 aus der Ausnehmung 25 ausgetreten ist, wird der Kupplungsring 12 mit dem Ende des Hakens 24 in seiner Lage festgehalten, damit der Haken 24 beim Rückhub auch wieder in die Ausnehmung 25 eintreten kann. Der Winkel, um den der Kupplungsring 12 maximal verstellt werden kann, ist geringfügig größer als die Teilung der Zähne an den beiden Stirnverzahnungen 13, 15. Auf diese Weise kann beim Rückhub eine Nachstellung um mehrere Zahnteilungen vermieden werden.

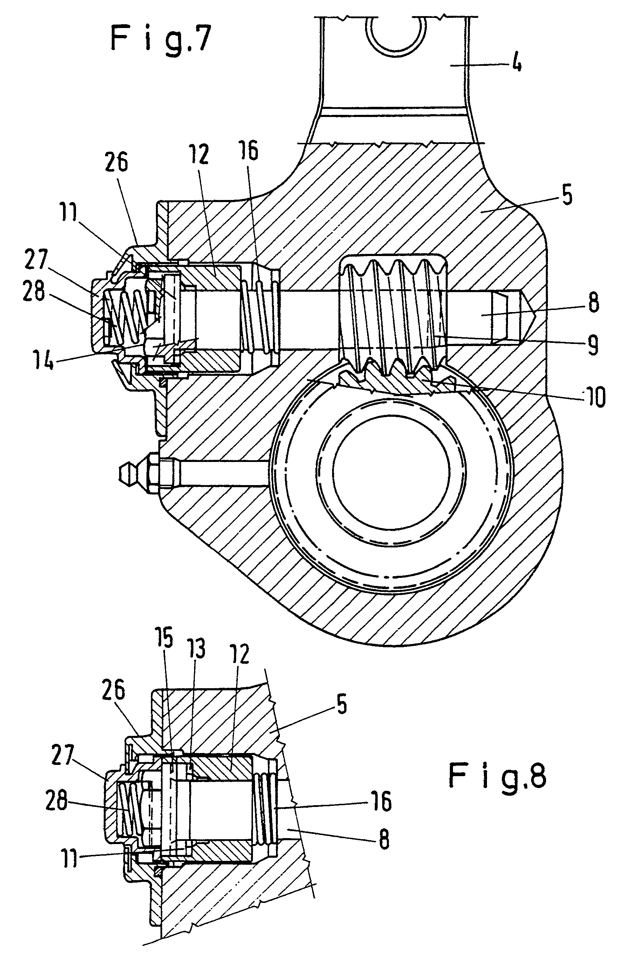

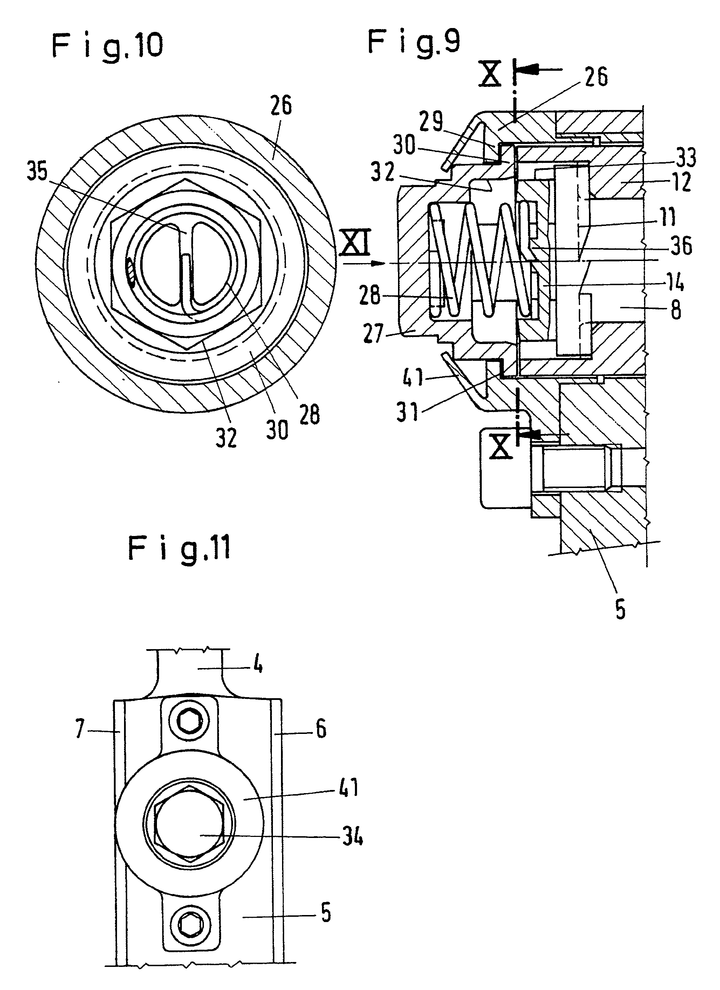

Zum Justieren der Nachstellvorrichtung nach einem Belagwechsel muß die Schneckenwelle 8 entgegen dem Drehsinn der Nachstellrichtung von Hand zurückgedreht werden. Dafür muß die Kupplung 11 zwischen den Beiden Stirnverzahnungen 13, 15 geöffnet werden. In den Fig. 7 bis 11 ist eine Ausführungsform einer Einrichtung zum Entkuppeln und Justieren dargestellt worden. Diese Einrichtung besteht aus einem am Gehäuse 5 befestigten Ring 26, einer Kappe 27 und einer zweiten Druckfeder 28.

An den Ring 26 ist ein nach innen vorspringender Ansatz 29 angeformt, der einen Flansch 30 an der Kappe 27 übergreift. Dadurch ist die Kappe 27 unverlierbar und formschlüssig, aber drehbar und axial beweglich am Gehäuse 5 bzw. dem Ring 26 geführt. Die Kappe 27 schleift mit ihrer Außenseite auf der Stirnseite des Ansatzes 29. Dadurch wird zwischen diesen beiden Konstruktionsteilen eine Reibungsbremse 31 ausgebildet, welche ein unbeabsichtigtes Verdrehen der Schneckenwelle entgegen dem Drehsinn der Nachstellung beim Normalbetrieb verhindert.

Wenn die Kappe 27 aus der in der Fig. 7 dargestellten eingerückten Lage der Kupplung 11 in die in der Fig. 8 dargestellten, ausgerückten Lage der Kupplung 11 gegen die Wirkung der Druckfeder 28 und 16 in axialer Richtung verschoben wird, öffnet sich zunächst die Kupplung 11 mit den Stirnverzahnungen 13, 15 und danach greift ein Innensechskant 32 über einen Außensechskant 33 am Schneckenwellenkopf 14. Danach ist es möglich, die Schneckenwelle 8 mit einem an der Kappe 27, beispielsweise einem Außensechskant 34 angesetzten Schlüssel zurückzudrehen. Sobald die Kappe 27 losgelassen wird, schieben die beiden Druckfedern 16, 28 die Kappe 27 in ihre Ausgangslage zurück und danach die Kupplung 11 wieder zusammen.

Die Reibungsbremse 31 zwischen dem Flansch 30 der Kappe 27 und dem Ansatz 29 des Ringes 26 wird dadurch ergänzt, daß die zweite Druckfeder 28 an der Kappe 27 formschlüssig in einem Schlitz 35 festgelegt ist und mit ihrem anderen Ende in eine Verzahnung 36 an der Schneckenwelle 8 eingreift.

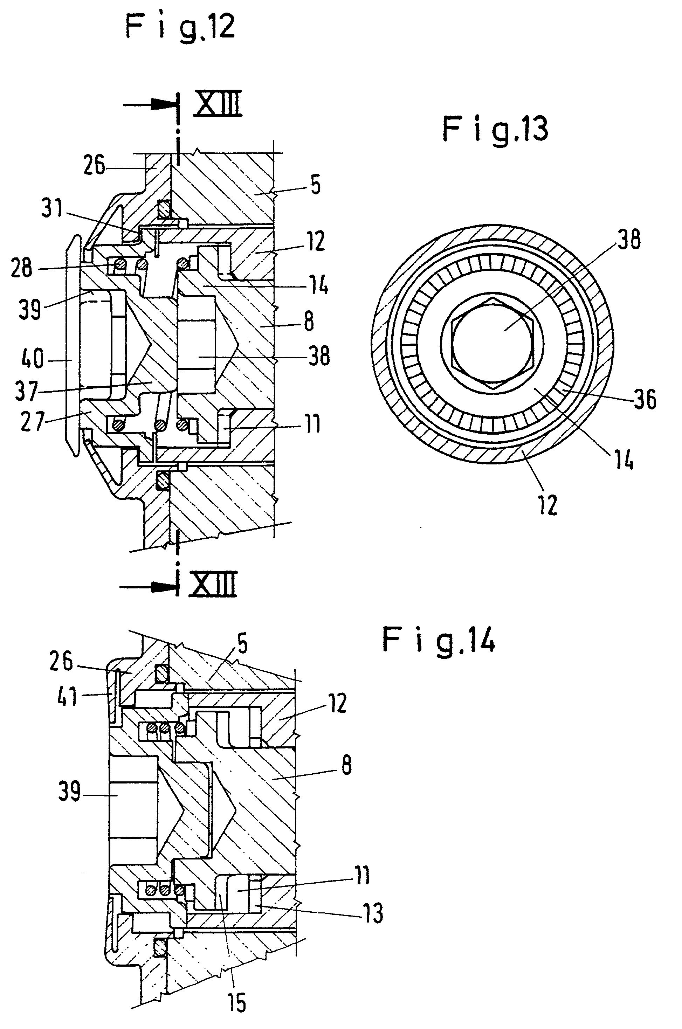

Eine andere Ausführungsform einer Einrichtung zum Entkuppeln und Justieren ist in den Fig. 12 bis 14 dargestellt worden, wobei Wirkungsweise gleich bleibt, aber an der Kappe 27 ein Außensechskant 37 angeordnet ist, der in einen Innensechskant am Schneckenwellenkopf 14 einrasten kann. Analog ist in der Außenseite der Kappe 27 ein Innensechskant 39 vorgesehen, der mit einem Deckel 40 geschlossen werden kann.

In beiden Ausführungsformen der Fig. 7 bis 11 und 12 bis 14 ist an den Ring 26 jeweils eine Dichtlippe 41 angeformt, die der Kappe 27 unter Vorspannung anliegt, um zu verhindern, daß Feuchtigkeit und Schmutz in den Spalt zwischen dem Ring 26 und der Kappe 27 eindringt. Um die Dichtlippe 41 an den Ring 26 einteilig anformen zu können, bietet es sich an, den Ring 26 aus Kunststoff herzustellen. Auch die Kappe 27 und der Deckel 40 können aus Kunststoff bestehen. Dadurch wird das Gewicht des Gestängestellers gering gehalten.

Bezugszeichenliste

| 1 | Achskörper |
|---|---|
| 2 | Membranzylinder |
| 3 | Kolbenstange |
| 4 | Bremshebel |
| 5 | Gehäuse |
| 6 | Deckel (äußerer) |
| 7 | Deckel (innerer) |
| 8 | Schneckenwelle |
| 9 | Schnecke |

| 10 | Schneckenrad |
|----|--------------|
| 11 | Kupplung |
| 12 | Kupplungsring |
| 13 | Stirnverzahnung |
| 14 | Schneckenwellenkopf |
| 15 | Stirnverzahnung |
| 16 | Druckfeder |
| 17 | Hebel |
| 18 | Hülse |
| 19 | Ring |
| 20 | Anschlagnocken |
| 21 | Aussparung |
| 22 | Treibglied |
| 23 | Kopf |
| 24 | Haken |
| 25 | Ausnehmung |
| 26 | Ring |
| 27 | Kappe |
| 28 | Druckfeder |
| 29 | Ansatz |
| 30 | Flansch |
| 31 | Reibungsbremse |
| 32 | Innensechskant |
| 33 | Außensechskant |
| 34 | Außensechskant |
| 35 | Schlitz |
| 36 | Riffelung |
| 37 | Außensechskant |
| 38 | Innensechskant |
| 39 | Innensechskant |
| 40 | Deckel |
| 41 | Dichtlippe |

**Patentansprüche**

1. Selbsttätige Nachstellvorrichtung für Fahrzeugbremsen mit einem als Bremshebel (4) dienenden Gehäuse (5), in dem ein aus Schnecke (9) und Schneckenrad (10) bestehendes Nachstellgetriebe angeordnet ist, welches über eine Kupplung (11) mit Stirnverzahnungen (13, 15) und ein Treibglied (22) mit einem in das Gehäuse (5) hineinragenden, feststehenden Hebel (17) zusammenarbeitet, wobei eine Stirnverzahnung (15) an der Schneckenwelle (8) und die andere Stirnverzahnung (13) an einem gegen eine erste Druckfeder (16) verschiebbar auf der Schneckenwelle (8) gelagerten Kupplungsring (12) angeordnet ist, die Schneckenwelle (8) am kupplungsseitigen Ende entgegen dem Drehsinn der Nachstellung manuell rückdrehbar ist und die Schneckenwelle (8) mit einer axialbeweglichen Kappe (27) abgedeckt ist, die mit einem nach außen vorspringenden Flansch (30) einerseits einen Ansatz (29) untergreift und andererseits am Kupplungsring (12) anliegt, **dadurch gekennzeichnet,** daß am Gehäuse (5) ein den Kupplungsring (12) umgebender Ring (26) mit dem nach innen vorspringenden Ansatz (29) befestigt ist, daß zwischen der Schneckenwelle (8) und der Kappe (27) eine zweite Druckfeder (28) angeordnet ist und daß Schneckenwelle (8) und Kappe (27) gegen die Wirkung der zweiten Druckfeder (28) durch Axialverschiebung der Kappe (27) miteinander kuppelbar sind und die Kappe (27) durch die Axialverschiebung den Kupplungsring (12) auch verschiebt, wodurch die Stirnverzahnungen (13, 15) ausgekuppelt werden.

2. Nachstellvorrichtung nach Anspruch 1, dadurch gekennzeichnet, daß die Berührungsflächen des Ansatzes (29) und des Flansches (30) als Reibungsbremse (31) ausgebildet sind.

3. Nachstellvorrichtung nach Anspruch 1, dadurch gekennzeichnet, daß die Kupplung zwischen der Schneckenwelle (8) und der Kappe (27) aus einem Außensechskant (33) an der Schneckenwelle (8) und einem Innensechskant (32) an der Kappe (27) besteht.

4. Nachstellvorrichtung nach Anspruch 1, dadurch gekennzeichnet, daß die Kupplung zwischen der Schneckenwelle (8) und der Kappe (27) aus einem Innensechskant (38) an der Schneckenwelle (8) und einem

5

Außensechskant (37) an der Kappe (27) besteht.

5. Nachstellvorrichtung nach Anspruch 1, dadurch gekennzeichnet, daß die zv. ɜite Druckfeder (28) mit der Kappe (27) formschlüssig und mit der Schneckenwelle (8) über eine Riffelung (36) verbunden ist, die ein unbeabsichtigtes Verdrehen der Schneckenwelle (8) verhindert.

6. Nachstellvorrichtung nach Anspruch 1, dadurch gekennzeichnet, daß an den Ring (26) eine elastische Dichtlippe (41) angeformt ist, die der Kappe (27) anliegt.

## Revendications

1. Dispositif de rattrapage de jeu automatique pour freins de véhicule comportant un carter (5) faisant office de levier de frein (4), dans lequel est logé un mécanisme de transmission de rattrapage de jeu composé d'une vis sans fin (9) et d'une roue tangente (10) et coopérant, par l'intermédiaire d'un accouplement (11) à dentures frontales (13, 15) et d'un organe entraîneur (22), avec un levier fixe (17) pénétrant dans le carter (5), l'une (15) des dentures frontales étant disposée sur l'arbre de vis sans fin (8) et l'autre denture frontale (13) sur un anneau d'accouplement (12) monté coulissant à l'encontre d'un premier ressort de compression (16) sur l'arbre de vis sans fin (8), l'arbre de vis sans fin (8) pouvant être tourné manuellement en retour à l'encontre du sens de rotation du rattrapage de jeu, et l'arbre de vis sans fin (8) étant recouvert par un cabochon (27) mobile axialement, qui par l'intermédiaire d'un flasque (30) en saillie vers l'extérieur, s'engage sous une embase (29) d'une part, et est appliqué contre l'anneau d'accouplement (12) d'autre part, caractérisé en ce que sur le carter (5) est fixé un anneau (26) entourant l'anneau d'accouplement (12) et comportant l'embase (29) en saillie vers l'intérieur, en ce qu'un second ressort de compression (28) est disposé entre l'arbre de vis sans fin (8) et le cabochon (27, et en ce que l'arbre de vis sans fin (8) et le cabochon (27) peuvent être accouplés entre-eux à l'encontre de l'action du second ressort de compression (28), par coulissement axial du cabochon (27), ce cabochon (27) produisant également par son coulissement axial, le déplacement de l'anneau d'accouplement (12), ce qui provoque le désaccouplement des dentures frontales (13, 15).

2. Dispositif de rattrapage de jeu selon la revendication 1, caractérisé en ce que les surfaces de contact de l'embase (29) et du flasque (30) sont réalisées sous la forme d'un frein à friction (31).

3. Dispositif de rattrapage de jeu selon la revendication 1, caractérisé en ce que l'accouplement entre l'arbre de vis sans fin (8) et le cabochon (27) est constitué par un six pans extérieur (33) sur l'arbre de vis sans fin (8) et par un six pans intérieur (32) sur le cabochon (27).

4. Dispositif de rattrapage de jeu selon la revendication 1, caractérisé en ce que l'accouplement entre l'arbre de vis sans fin (8) et le cabochon (27) est constitué par un six pans intérieur (38) sur l'arbre de vis sans fin (8) et par un six pans extérieur (37) sur le cabochon (27).

5. Dispositif de rattrapage de jeu selon la revendication 1, caractérisé en ce que le second ressort de compression (28) est relié au cabochon (27) par complémentarité de forme et à l'arbre de vis sans fin (8) par l'intermédiaire d'une dentelure (36), qui empêche une rotation non intentionnelle de l'arbre de vis sans fin (8).

6. Dispositif de rattrapage de jeu selon la revendication 1, caractérisé en ce que sur l'anneau (26) est formée une lèvre d'étanchéité (41) qui s'applique contre le cabochon (27).

## Claims

1. An automatic adjustment mechanism for vehicle brakes, comprising a housing (5) acting as a brake lever (4) and containing an adjustment gear consisting of a worm (9) and wormwheel (10), said gear cooperating, via a coupling (11) having spur teeth (13, 15) and a driving element (22), with a fixed lever (17) projecting into the housing (5), one spur toothing (15) being disposed on the worm shaft (8) and the other spur toothing (13) being disposed on a coupling ring (12) which is mounted on the worm shaft (8) for displacement against a first compression spring (16), the worm shaft (8) being adapted, at the end adjacent the coupling, to be turned back manually in opposition to the direction of rotation of the adjustment, and the worm shaft (8) being covered by an axially movable cap (27) which, by means of an outwardly projecting flange (30), on the one hand engages beneath a projection (29) and on the other hand bears against the coupling ring (12), characterised in that a ring (26) having the inwardly extending projection (29) and surrounding the coupling ring (12) is fixed on the housing (5), in that a second compression spring (28) is disposed between the worm shaft (8) and the cap (27) and in that the worm shaft (8) and the cap (27) are adapted to be coupled together by axial displacement of the cap (27) against the action of the second compression spring (28) and the cap (27) also displaces the coupling ring (12) as a result of the axial displacement so that the spur teeth (13, 15) are disengaged.

2. An adjustment mechanism according to claim 1, characterised in that the contact surfaces of the projection (29) and of the flange (30) are constructed as a friction brake (31).

3. An adjustment mechanism according to claim 1, characterised in that the coupling between the worm shaft (8) and the cap (27) consists of an external hexagon (33) on the worm shaft (8) and an internal hexagon (32) on the cap (27).

4. An adjustment mechanism according to claim 1, characterised in that the coupling between the worm shaft (8) and the cap (27) consists of an internal hexagon (38) on the worm shaft (8) and an external hexagon (37) on the cap (27).

5. An adjustment mechanism according to claim 1, characterised in that the second compression spring (28) is positively connected to the cap (27) and is connected to the worm shaft (8) via a fluting (36) which prevents unintentional turning of the worm shaft (8).

6. An adjustment mechanism according to claim 1, characterised in that an elastic sealing lip (41) bearing against the cap (27) is formed on the ring (26).

# Fig.1

EP 0 319 693 B1

# Fig.2

9

# F i g.3

# F i g.4

# Fig.5

# Fig.6

Fig.7

Fig.10

Fig.9

Fig.11

F i g.12

F i g.13

F i g.14